(19) Europäisches Patentamt / European Patent Office / Office européen des brevets

(11) **EP 4 214 464 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **21755418.7**

(22) Anmeldetag: **02.08.2021**

(51) Internationale Patentklassifikation (IPC):
**G01B 11/06** (2006.01)      **B29C 48/09** (2019.01)
**B29C 48/92** (2019.01)      **G01B 11/08** (2006.01)
**B29C 48/06** (2019.01)      **B29C 48/07** (2019.01)
**G01B 21/08** (2006.01)      **G01B 21/12** (2006.01)

(52) Gemeinsame Patentklassifikation (CPC):
**G01B 11/06; B29C 48/07; B29C 48/92;
G01B 11/08; G01B 21/08; G01B 21/12;**
B29C 48/06; B29C 48/09; B29C 2948/92609;
B29C 2948/92666; B29C 2948/92942

(86) Internationale Anmeldenummer:
**PCT/EP2021/071572**

(87) Internationale Veröffentlichungsnummer:
**WO 2022/058081 (24.03.2022 Gazette 2022/12)**

(54) **VERFAHREN ZUM BESTIMMEN MINDESTENS EINES GEOMETRIEPARAMETERS EINES STRANG- ODER PLATTENFÖRMIGEN GEGENSTANDS**

METHOD FOR DETERMINING AT LEAST ONE GEOMETRIC PARAMETER OF A STRAND- OR PLATE-SHAPED OBJECT

PROCÉDÉ DE DÉTERMINATION D'AU MOINS UN PARAMÈTRE GÉOMÉTRIQUE D'UN OBJET EN FORME DE FIL OU DE PLAQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2020   DE 102020124263**

(43) Veröffentlichungstag der Anmeldung:
**26.07.2023   Patentblatt 2023/30**

(73) Patentinhaber: **SIKORA AG**
**28307 Bremen (DE)**

(72) Erfinder:
• **BOLTE, Hilmar**
  **28717 Bremen (DE)**

• **SIKORA, Harald**
  **28357 Bremen (DE)**
• **SCHUH, Kolja Tobias**
  **28307 Bremen (DE)**

(74) Vertreter: **Hauck Patentanwaltspartnerschaft mbB**
**Postfach 11 31 53**
**20431 Hamburg (DE)**

(56) Entgegenhaltungen:
**EP-A2- 0 400 310      WO-A1-2020/070047
CA-A1- 2 891 456**

EP 4 214 464 B1

**Beschreibung**

Die Erfindung betrifft ein Verfahren zum Bestimmen mindestens eines Geometrieparameters eines noch nicht vollständig verfestigten, noch fließfähige Anteile aufweisenden strang- oder plattenförmigen Gegenstands.

Beispielsweise in Extrusionsanlagen werden strangförmige Kunststoffgegenstände hergestellt und entlang einer Förderrichtung gefördert, beispielsweise durch Abkühlstrecken, bis diese vollständig auf Umgebungstemperatur erkaltet und entsprechend vollständig ausgehärtet bzw. verfestigt sind. Unmittelbar nach Austritt aus der Extrusionsanlage und noch über einen weiteren Bereich der Förderstrecke sind derartige Stränge noch nicht vollständig verfestigt und besitzen entsprechend noch fließfähige Anteile in Form von Schmelze.

Aus WO 2016/139155 A1 und DE 10 2018 128 248 A1 sind Verfahren und Vorrichtungen bekannt, mit denen der Brechungsindex von strang- oder plattenförmigen Kunststoffgegenständen anhand Bestrahlens der Gegenstände mit Terahertzstrahlung und Empfangen der von den Gegenständen reflektierten Terahertzstrahlung bestimmt werden kann. Es handelt sich dabei um einen mittleren Brechungsindex über den Querschnitt des Gegenstands bzw. den bestrahlten Abschnitt des Gegenstands. Auf dieser Grundlage können Geometrieparameter des Gegenstandes, z.B. eine Wanddicke oder ein Durchmesser von Rohren, zuverlässig auch bei zunächst unbekanntem Brechungsindex bestimmt werden.

Insbesondere bei einem Vermessen der Gegenstände kurz nach Austritt aus der Extrusionsanlage können die so ermittelten Geometrieparameter allerdings von den tatsächlichen Geometrieparametern im vollständig verfestigten Zustand des Gegenstandes abweichen. Zuverlässigere Ergebnisse könnten bei einer späteren Bestimmung von Brechungsindex und Geometrieparameter erfolgen, wenn der Gegenstand bereits vollständig verfestigt ist, also im Wesentlichen keine fließfähigen Anteile mehr aufweist. Andererseits besteht der Wunsch, die Geometrieparameter möglichst schnell nach Austritt zum Beispiel aus einer Extrusionsanlage zu bestimmen, um bei fehlerhaften Parametern möglichst schnell in den Produktionsprozess eingreifen und damit Ausschuss minimieren zu können.

Es besteht daher ein Bedürfnis, auch bei einer Messung eines strang- oder plattenförmigen Gegenstands im noch nicht vollständig verfestigten Zustand, wenn dieser noch fließfähige Anteile aufweist, bereits Geometrieparameter des strangoder plattenförmigen Gegenstands im vollständig verfestigten Zustand bestimmen zu können.

WO 2020/070047 A1 beschreibt ein Verfahren und eine Vorrichtung zum Steuern einer Produktionsanlage für plattenförmige oder stangenförmige Körper. Dabei wird der Körper mittels Messstrahlung im Gigahertz- oder Terahertz-Frequenzbereich bestrahlt und anhand der detektierten Messstrahlung der Brechungsindex des Körpers und/oder die Absorption der Messstrahlung durch den Körper zu mehreren Zeitpunkten während des Förderns des Körpers durch den Messbereich oder an verschiedenen Orten des Körpers bestimmt. Auf dieser Grundlage wird mindestens ein Produktionsparameter der Produktionsanlage gesteuert.

EP 0 400 310 A2 beschreibt eine Vorrichtung zur Regelung des Außendurchmessers insbesondere eines Kabels. Das Messsignal einer Messvorrichtung zur Messung des Durchmessers wird in einer Vergleichsvorrichtung mit einem Solldurchmesser verglichen und ein Referenzsignal erzeugt. Ein das Differenzsignal erhaltender Regler zur Regelung der Drehzahl des Extruders und/oder der Geschwindigkeit, mit der das Kabel vom Extruder abgezogen wird, ist vorgesehen, wobei dem Regler eine Rechenstufe vorgeschaltet ist, die ein mit dem jeweiligen Durchmessersignal moduliertes Vergleichssignal erzeugt, das auf den Regler gegeben wird.

CA 2 891 456 A1 beschreibt ein System zum Messen und Steuern der Dicke eines Asphaltbedeckungsmaterials während der Herstellung. Lichtstrahlen generieren ein Laufzeitsignal, das zur Bestimmung der Dicke der Asphaltbedeckungsschicht verwendet wird. Eine Steuerung erzeugt ein Steuersignal, das einen Beschichter steuert, um Parameter des Beschichters zum Herstellen der Asphaltbedeckungsschicht mit einer gewünschten Dicke anzupassen.

Ausgehend von dem erläuterten Stand der Technik liegt der Erfindung daher die Aufgabe zugrunde, bereits im noch nicht vollständig verfestigten Zustand des strang- oder plattenförmigen Gegenstands eine zuverlässige Aussage über Geometrieparameter des strangoder plattenförmigen Gegenstands im vollständig verfestigten Zustand treffen zu können.

Die Erfindung löst die Aufgabe durch ein Verfahren nach Anspruch 1. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte:

- in einem Ermittlungsschritt wird für den strang- oder plattenförmigen Gegenstand ein Zusammenhang zwischen dem Brechungsindex des strangoder plattenförmigen Gegenstands und einer im Zuge seiner vollständigen Verfestigung erfolgenden Schrumpfung ermittelt,
- in einem Bestimmungsschritt werden der Brechungsindex und mindestens ein Geometrieparameter des noch nicht vollständig verfestigten, noch fließfähige Anteile aufweisenden strang- oder plattenförmigen Gegenstands bestimmt,
- aus den im Bestimmungsschritt bestimmten Werten für den Brechungsindex und den mindestens einen Geometrieparameter wird unter Berücksichtigung des im Ermittlungsschritt ermittelten Zusammenhangs der mindestens eine Geometrieparameter im vollständig verfestigten Zustand des strang- oder plattenförmigen Gegenstands berechnet.

Der erfindungsgemäß untersuchte strang- oder plattenförmige Gegenstand befindet sich in einem erhitzten Zustand, beispielsweise aus einer Produktionsanlage kommend, und ist noch nicht vollständig auf Umgebungstemperatur erkaltet. Er ist entsprechend noch nicht vollständig verfestigt und besitzt insbesondere in seinem Inneren noch nicht vollständig ausgehärtete, zähflüssige Bestandteile in Form von Schmelze, die erst im Zuge seiner weiteren Abkühlung aushärten. Im Zuge der weiteren Erkaltung und damit Verfestigung des strang- oder plattenförmigen Gegenstands kommt es zu einer Schrumpfung des Materials des Gegenstands. Der strang- oder plattenförmige Gegenstand kann ein Strang oder eine Platte sein, zum Beispiel ein Kunststoffstrang oder eine Kunststoffplatte. Eine den strang- oder plattenförmigen Gegenstand erzeugende Produktionsanlage kann zum Beispiel eine Extrusionsanlage sein. Der strang- oder plattenförmige Gegenstand kann entsprechend ein in einer Extrusionsanlage extrudierter strang- oder plattenförmiger Gegenstand sein. Es kann sich bei dem Strang beispielsweise um ein Rohr handeln. Weiterhin kann der Gegenstand während der erfindungsgemäßen Bestimmung mindestens eines Geometrieparameters entlang einer Förderrichtung gefördert werden, zum Beispiel entlang seiner Längsachse.

Der vorliegenden Erfindung liegt die Erkenntnis zugrunde, dass zwischen dem Brechungsindex des Materials des Gegenstands und dem Schrumpfungsvorgang im Zuge der vollständigen Verfestigung des strang- oder plattenförmigen Gegenstands ein mathematisch gut zu beschreibender Zusammenhang besteht. Untersuchungen haben ergeben, dass über den Verfestigungszeitraum des strang- oder plattenförmigen Gegenstands der Brechungsindex ein etwa inverses Verhalten zu Geometrieparametern, wie zum Beispiel der Wanddicke oder dem Durchmesser eines Rohrs, zeigt. Während der Brechungsindex mit zunehmender Verfestigung, also mit der Zeit, ansteigt, nehmen Geometrieparameter, wie Durchmesser und Wanddicke, entsprechend ab. Dies wird nachfolgend anhand der Zeichnungen noch näher erläutert. Untersuchungen haben weiter ergeben, dass dieser Zusammenhang spezifisch ist für den jeweiligen strang- oder plattenförmigen Gegenstand, insbesondere die genaue Zusammensetzung des Materials. Für ein bestimmtes Material zeigt sich dabei jedoch eine gute Reproduzierbarkeit.

Auf Grundlage dieser Erkenntnis wird bei dem erfindungsgemäßen Verfahren für den jeweils zu bestimmenden strang- oder plattenförmigen Gegenstand in einem Ermittlungsschritt der Zusammenhang zwischen dem Brechungsindex des strangoder plattenförmigen Gegenstands und dem bis zu seiner vollständigen Verfestigung erfolgenden Schrumpfungsvorgang ermittelt. Dieser Zusammenhang, der zum Beispiel in Form einer Kennlinie ermittelt werden kann, wird erfindungsgemäß genutzt, um anhand einer Brechungsindexbestimmung des Materials im noch nicht vollständig verfestigten Zustand auf eine noch zu erwartende Schrumpfung des Materials zu schließen. Dazu werden in einem Bestimmungsschritt der Brechungsindex und mindestens ein Geometrieparameter des noch nicht vollständig verfestigten, noch fließfähige Anteile aufweisenden strang- oder plattenförmigen Gegenstands bestimmt. Aus der mittels des zuvor ermittelten Zusammenhangs festgestellten, zu erwartenden Schrumpfung kann nun anhand des im noch nicht vollständig verfestigten Zustand bestimmten Geometrieparameters auf den entsprechenden (geschrumpften) Wert des Geometrieparameters im vollständig verfestigten Zustand des strang- oder plattenförmigen Gegenstands geschlossen werden. Entsprechend wird erfindungsgemäß aus den im Bestimmungsschritt bestimmten Werten für den Brechungsindex und den mindestens einen Geometrieparameter unter Berücksichtigung des im Ermittlungsschritt ermittelten Zusammenhangs der mindestens eine Geometrieparameter im vollständig verfestigten Zustand des strang- oder plattenförmigen Gegenstands berechnet.

Wie unten noch näher erläutert werden wird, ist der Brechungsindex insbesondere von Kunststoffen stark nichtlinear von der Temperatur abhängig. Besonders stark ändert sich dieser beim Übergang von dem Aggregatzustand fest zu flüssig. Entsprechend unterliegt ein Geometrieparameter, der für einen noch nicht vollständig verfestigten strang- oder plattenförmigen Gegenstand bestimmt wird, im Zuge der weiteren Verfestigung noch Änderungen, insbesondere aufgrund der Schrumpfung, die mit dem Anteil noch nicht verfestigter Schmelze im Inneren des strang- oder plattenförmigen Gegenstands variiert. Der Schrumpfungsgrad hängt dabei stark von der Materialzusammensetzung des strang- oder plattenförmigen Gegenstands und in geringerem Maße auch von den Dimensionen des strang- oder plattenförmigen Gegenstands ab. Die im Stand der Technik vorgenommene Annahme einer konstanten Schrumpfung und eine darauf basierende Vorhersage eines im nicht vollständig verfestigen Zustand bestimmten Geometrieparameters im vollständig verfestigten Zustand sind entsprechend nicht hinreichend genau. Um eine gute Prognose der Kaltwerte des mindestens einen Geometrieparameters zu erreichen, erfolgt erfindungsgemäß vielmehr für jeden strang- oder plattenförmigen Gegenstand, also für das jeweilige Produkt, die Bestimmung eines eigenen Schrumpfungsgrades. Damit werden die jeweilige Materialzusammensetzung und die Dimensionen des Gegenstandes berücksichtigt. Neben der Materialzusammensetzung und den Dimensionen kann die Schrumpfung in geringerem Maße auch von Produktionsbedingungen abhängen, wie der Produktionsgeschwindigkeit. So ändert sich zum Beispiel der Anteil von Schmelze und damit der Brechungsindex mit der Produktionsgeschwindigkeit. Daher kann der Schrumpfungsgrad bzw. der im Ermittlungsschritt ermittelte Zusammenhang auch für die jeweiligen Produktionsbedingungen, also zum Beispiel eine bestimmte Produktionsgeschwindigkeit, bestimmt werden, um Einflüsse unterschiedlicher Produktionsgeschwindigkeiten zu erkennen.

Gemäß der Erfindung kann also der jeweils zu bestimmende Geometrieparameter auch bei einer frühen Messung im noch nicht vollständig verfestigen Zustand des strang- oder plattenförmigen Gegenstands zuverlässig in seinem Endwert im vollständig verfestigen Zustand des strang- oder plattenförmigen Gegenstands vorhergesagt werden. Da der Zusammenhang für den jeweils zu vermessenden strang- oder plattenförmigen Gegenstand, und vorzugsweise auch für die jeweiligen Produktionsbedingungen erfasst wird, wirken sich beispielsweise eine möglicherweise auch unerkannte Veränderung der Zusammensetzung des Materials oder anderer Parameter des Produktionsprozesses, nicht verfälschend auf das Ergebnis der erfindungsgemäßen Bestimmung aus.

Für die Ermittlung des Schrumpfungsgrades ist Voraussetzung, dass der Brechungsindex des Materials des Gegenstands im vollständig verfestigten Zustand bekannt ist. Dieser kann entweder bestimmt werden, beispielsweise in einer der unten erläuterten Weisen zur Bestimmung des Brechungsindex oder, sofern mit ausreichender Genauigkeit bekannt, für das jeweils vorliegende Material des Gegenstands als bekannt angenommen werden.

Mit dem erfindungsgemäßen Verfahren zur Vorhersage der zu erwartenden Schrumpfung von Geometrieparametern, wie zum Beispiel der Wanddicke und des Durchmessers eines Rohrs, können in einer Extrusionslinie bereits kurz nach der Extrusion die relevanten Messwerte erfasst und trotz anteiliger Schmelze in der Wandung zum Beispiel eines Rohrs die zu erwartenden Endwerte bezogen auf die Standardtemperatur von 22°C vorhergesagt und angezeigt werden, aber auch als Ist-Wert für die Regelung auf Nennmaß eingesetzt werden.

Die Extrusion zum Beispiel von Rohren mit Durchmessern bis zu 2,5 m erfolgt mit Kriechgeschwindigkeiten von wenigen Zentimetern bis etwa ein Meter pro Minute. Konventionelle Messanlagen können erst nach etwa 30 bis 50 Metern am Ende der Extrusionslinie, also nach Stunden, die relevanten Parameter messen. Eine frühe Messung zum Abgleich der Wanddicke auf zu erwartendes Nennmaß und dessen Gleichförmigkeit über den Umfang des Rohres ist von erheblicher wirtschaftlicher Bedeutung. Die Ausstoßleistung eines typischen Extruders beträgt etwa 400 kg/h, bei 5000 h/Jahr ist ein Materialverbrauch von 2 Mio. kg anzusetzen. Bei einem Preis von etwas mehr als 1 Euro/kg können mit dem erfindungsgemäßen Verfahren leicht 100.000 bis 200.000 Euro pro Jahr gegenüber dem Stand der Technik eingespart werden.

Nach einer besonders praxisgemäßen Ausgestaltung kann der Geometrieparameter der Durchmesser und/oder die Wanddicke eines Rohrs sein, wobei in dem Bestimmungsschritt ein Zusammenhang zwischen dem Brechungsindex des Rohrs und einer im Zuge seiner vollständigen Verfestigung erfolgenden Schrumpfung für den Durchmesser und/oder die Wanddicke des Rohrs ermittelt wird. Insbesondere wenn sowohl Wanddicke als auch Durchmesser als geometrische Parameter ermittelt werden, kann also jeweils ein Zusammenhang zwischen dem Brechungsindex und der Schrumpfung für die Wanddicke und für den Durchmesser erfolgen. Dieser Ausgestaltung liegt die Erkenntnis zugrunde, dass der Schrumpfungsgrad für unterschiedliche Geometrieparameter unterschiedlich sein kann. Dies ist durch entsprechende Untersuchungen festgestellt worden. Beispielsweise kann die Schrumpfung des Durchmessers im Zuge der vollständigen Verfestigung um den Faktor 2 bis 3 kleiner sein als für die Wanddicke. Als Grund wird angenommen, dass insbesondere die den Durchmesser festlegende Außenseite eines Rohrs bereits früh abkühlt und sich verfestigt, sodass der Durchmesser des Rohrs nicht mehr so stark schrumpft, während zähflüssige Anteile insbesondere noch im Inneren des Rohrs vorliegen, wobei auch die Innenseite des Rohrs später abkühlt und sich damit verfestigt als die Außenseite, sodass bei der Wanddicke eine größere Schrumpfung erfolgt. Der relative Schrumpfungsgrad kann in der Praxis beim Durchmesser zum Beispiel im Bereich von 2 bis 3% liegen und bei der Wanddicke beispielsweise im Bereich von 6 bis 8%. Es versteht sich, dass diese Werte abhängig von dem Material, den Abmessungen des strang- oder plattenförmigen Gegenstands und den jeweiligen Produktionsbedingungen variieren können. Beispielsweise bei besonders großen Rohren können sich erheblich größere Schrumpfungsgrade von mehr als 15% ergeben, insbesondere da die Oberfläche mit steigendem Rohrdurchmesser weniger stark zunimmt als das Volumen.

Wie bereits erläutert, kann der strang- oder plattenförmige Gegenstand aus einer Extrusionsanlage kommen und während der Bestimmung des mindestens einen Geometrieparameters entlang seiner Längsrichtung gefördert werden.

Nach einer weiteren Ausgestaltung kann der Zusammenhang im Ermittlungsschritt ermittelt werden, indem zu mehreren Zeitpunkten und/oder an mehreren Orten des strang- oder plattenförmigen Gegenstands der Brechungsindex und der mindestens eine Geometrieparameter bestimmt werden. Auf diese Weise können Stützwerte aufgenommen werden zum Beispiel für eine den Zusammenhang visualisierende Kennlinie. Zwischen den Stützwerten kann dann entsprechend zum Beispiel interpoliert werden. Es versteht sich, dass mit der Anzahl der Stützwerte die Zuverlässigkeit der für den Zusammenhang ermittelten Werte steigt.

Nach einer diesbezüglichen weiteren Ausgestaltung kann der Zusammenhang im Ermittlungsschritt ermittelt werden, indem der strang- oder plattenförmige Gegenstand sich zumindest entlang eines Längsabschnitts vollständig verfestigen gelassen wird, wobei während des vollständigen Verfestigens mehrfach der Brechungsindex und der mindestens eine Geometrieparameter bestimmt werden. Zum Beispiel wäre es denkbar, in einem ersten Schritt einen aus einer Extrusionsanlage kommenden strang- oder plattenförmigen Gegenstand anzuhalten, die Produktion also zu unterbrechen, und dann zu mehreren Zeitpunkten, beispielsweise im Wesentlichen kontinuierlich, bis zur vollständigen Verfestigung des strang- oder plattenförmigen Gegenstands den Brechungsindex und den mindestens einen Geometrieparameter zu bestimmen.

Wie bereits erläutert kann der Zusammenhang im Ermittlungsschritt in Form mindestens einer Kennlinie dargestellt werden, vorzugsweise einer Kennlinie, in der der Schrumpfungsgrad des strang- oder plattenförmigen Gegenstands über dem Brechungsindex aufgetragen ist. Anhand der im Bestimmungsschritt erfolgenden Bestimmung des Brechungsindex und des mindestens einen Geometrieparameters des noch nicht vollständig verfestigten strang- oder plattenförmigen Gegenstands kann dann die Position auf der Kennlinie und damit die noch bis zur vollständigen Verfestigung zu erwartende Schrumpfung in einfacher Weise bestimmt werden. Zum Beispiel kann der mindestens eine Geometrieparameter auf den Wert nach der vollständigen Verfestigung normiert werden. Der Schrumpfungsgrad kann dann in Prozent als Funktion des Brechungsindex aufgetragen werden.

Sofern zum Beispiel als Geometrieparameter die Wanddicke und der Durchmesser eines Rohrs bestimmt werden, ergibt sich der Schrumpfungsgrad $S_{wt}(n)$ für die Wanddicke in Prozent als Funktion des Brechungsindex wie folgt:

$$S_{wt}(n) = \left(\frac{wt(n)}{wt_{end}} - 1\right) \cdot 100\%$$

Darin ist $wt_{end}$ die endgültige Wanddicke nach vollständiger Verfestigung des Rohrs und $wt(n)$ die im Bestimmungsschritt bestimmte Wanddicke im noch nicht vollständig verfestigten Zustand.

Der Schrumpfungsgrad $S_d(n)$ des Durchmessers in Prozent ergibt sich als Funktion des Brechungsindex wie folgt:

$$S_d(n) = \left(\frac{d(n)}{d_{end}} - 1\right) \cdot 100\%$$

Darin bezeichnet $d_{end}$ den endgültigen Durchmesser nach vollständiger Verfestigung des Rohrs und $d(n)$ den im Bestimmungsschritt erfassten Durchmesser im noch nicht vollständig verfestigten Zustand des Rohrs.

Nach einer weiteren Ausgestaltung kann vorgesehen sein, dass zur Bestimmung des Brechungsindex und/oder des mindestens einen Geometrieparameters Terahertzstrahlung auf den strang- oder plattenförmigen Gegenstand ausgesandt wird, von dem strang- oder plattenförmigen Gegenstand reflektierte Terahertzstrahlung detektiert wird, und aus der detektierten Terahertzstrahlung, insbesondere der Intensität der detektierten Terahertzstrahlung, der Brechungsindex zum Beispiel im Bereich der Oberfläche des strang- oder plattenförmigen Gegenstands und/oder der mindestens eine Geometrieparameter, wie zum Beispiel der Durchmesser oder die Wanddicke eines Rohrs, bestimmt wird. Bei dieser Ausgestaltung wird Terahertzstrahlung auf den strang- oder plattenförmigen Gegenstand ausgesandt. Die Terahertzstrahlung kann teilweise in den strang- oder plattenförmigen Gegenstand eintreten. Sie wird an (äußeren und gegebenenfalls inneren) Grenzflächen des strang- oder plattenförmigen Gegenstands reflektiert und von einem geeigneten Detektor detektiert. Die Frequenz der Terahertzstrahlung kann zum Beispiel in einem Frequenzbereich von 10 GHz bis 3 THz liegen. Es kann sich um sogenannte Millimeterwellen handeln. Ein die Terahertzstrahlung aussendender Sender und ein die reflektierte Terahertzstrahlung empfangener Detektor können im Wesentlichen an demselben Ort angeordnet sein. Sie können zum Beispiel in einen Transceiver integriert sein. Mit Teraherzstrahlung lassen sich Geometrieparameter und der Brechungsindex in zuverlässiger Weise bestimmen, insbesondere auch in schwierigen Prozessumgebungen, in denen optische Systeme, wie Laser, Schwierigkeiten haben. Eine Bestimmung des Brechungsindex oder von Geometrieparametern mit Terahertzstrahlung ist zum Beispiel beschrieben in WO 2016/139155 A1 oder DE 10 2018 128 248 A1. Auf diese Druckschriften wird entsprechend Bezug genommen.

Die Terahertzstrahlung kann modulierte Dauerstrich-Terahertzstrahlung sein, insbesondere frequenzmodulierte Dauerstrich-Terahertzstrahlung. Auch kann die Terahertzstrahlung impulsmodulierte Terahertzstrahlung oder phasenmodulierte Terahertzstrahlung sein. Die Frequenzmodulation kann einen Frequenz-Burst oder mehrere Frequenz-Bursts umfassen. Insbesondere kann ein sogenannter Frequenz-Sweep erfolgen, bei dem ein vorgegebener Frequenzbereich ein oder mehrmals durchfahren wird. Als impuls- oder phasenmodulierte Terahertzstrahlung kann zum Beispiel ein sogenanntes Time Domain Reflectometry-Verfahren oder Frequency Domain Reflectometry-Verfahren zum Einsatz kommen. Auch das Versenden mehrerer diskreter Frequenzen anstelle eines Frequenzspektrums ist denkbar.

Der mindestens eine Geometrieparameter kann aus einer Laufzeitmessung der ausgesandten und von dem strang- oder plattenförmigen Gegenstand reflektierten Terahertzstrahlung bestimmt werden, wie dies beispielsweise in WO 2016/139155 A1 beschrieben ist.

Nach einer weiteren Ausgestaltung kann vorgesehen sein, dass mindestens ein Sender zum Aussenden der Terahertzstrahlung und mindestens ein Detektor zum Detektieren der ausgesandten und von dem strang- oder plattenförmigen Gegenstand reflektierten Terahertzstrahlung während des Aussendens und Detektierens der Terahertzstrahlung um die Längsachse des strangförmigen Gegenstands gedreht wird, vorzugsweise entlang einer Kreisbahn oder parallel zur Oberfläche des plattenförmigen Gegenstands verschoben. Durch das Rotieren bzw. Verschieben eines Paars aus Sender und Detektor, beispielsweise eines Transceivers, können über den Umfang bzw. die Plattenbreite des strang- bzw. plattenförmigen Gegenstands verteilt Werte für den mindestens einen Geometrieparameter erfasst werden. Beispielsweise kann auf diese Weise ein sogenanntes Sagging festgestellt werden, wie dies beispielsweise im Zuge der Extrusion entstehen kann, also ein Fließen des Materials im noch nicht vollständig verfestigten Zustand nach unten. Auch eine Unrundheit eines Strangs kann auf diese Weise ermittelt werden. Dies ist ebenfalls grundsätzlich in WO 2016/139155 A1 beschrieben. Natürlich wäre es auch denkbar, mehrere Paare von Sendern und Empfängern über den Umfang bzw. parallel zur Oberfläche des strang- bzw. plattenförmigen Gegenstands verteilt anzuordnen und auf diese Weise mehrere Messwerte über den Umfang bzw. parallel zur Oberfläche zu ermitteln.

Nach einer weiteren Ausgestaltung kann die ausgesandte Terahertzstrahlung vor der Detektion den strang- oder plattenförmigen Gegenstand durchstrahlen, wobei anhand einer durch das Material des strang- oder plattenförmigen Gegenstands verursachten Laufzeitänderung der ausgesandten und nach Durchstrahlen des strangoder plattenförmigen Gegenstands empfangenen Terahertzstrahlung der Brechungsindex des strang- oder plattenförmigen Gegenstands bestimmt wird. Dies ist grundsätzlich in WO 2016/139155 A1 erläutert. So kann aus einer ermittelten Änderung der Ausbreitungsgeschwindigkeit bei Vorhandensein des strang- oder plattenförmigen Gegenstands im Strahlungsgang gegenüber dem Strahlungsgang ohne strang- oder plattenförmigen Gegenstand auf die diese Änderung verursachende Materialkonstanten des strang- oder plattenförmigen Gegenstands geschlossen werden, insbesondere den Brechungsindex und/oder die Dielektrizitätszahl.

Nach einer weiteren Ausgestaltung kann die ausgesandte Terahertzstrahlung nach Durchstrahlen des strang- oder plattenförmigen Gegenstands von einem Reflektor reflektiert werden und vor der Detektion den strang- oder plattenförmigen Gegenstand erneut durchstrahlen. Beispielsweise gegenüberliegend zu einem Sender für die Terahertzstrahlung in Strahlungsrichtung der von dem Sender ausgesandten Terahertzstrahlung hinter dem strang- oder plattenförmigen Gegenstand ist bei dieser Ausgestaltung ein Reflektor für die Terahertzstrahlung angeordnet. Der Reflektor kann ein zylindrisch gewölbter Reflektor sein, dessen Längsachse in Richtung der Längsachse eines Strangs verläuft. Der Krümmungsmittelpunkt des Reflektors kann mit dem Krümmungsmittelpunkt eines zu vermessenden Strangs zusammenfallen. Die Brennlinie des hohlzylindrischen Reflektors fällt dann also mit der Längsachse des Strangs zusammen. Ein Reflektor verstärkt das Messsignal, weil auch die durch den Reflektor zurück zu dem Empfänger geleiteten Signale zur Auswertung kommen können. Außerdem erlaubt der Reflektor eine noch bessere Diskriminierung der unterschiedlichen von dem oder den Detektoren empfangenen Messsignale, besonders bei Mehrfachreflexionen. So gestattet ein Reflektor die getrennte Auswertung der dem Sender bzw. Detektor zugewandten bzw. abgewandten Vorder- und Rückseite eines strang- oder plattenförmigen Gegenstands und kann somit Störungen durch Mehrfachreflexionen vermeiden. Insbesondere gestattet ein Reflektor eine Messung durch Reflexionen der Terahertzstrahlung an Grenzflächen des strang- oder plattenförmigen Gegenstands sowohl auf dem Hinweg der Strahlung von dem Sender zu dem Reflektor als auch auf dem Rückweg der Strahlung von dem Reflektor zu dem Detektor. So können beispielsweise Laufzeiten verglichen werden von Signalen, die einerseits von dem Sender/Detektor direkt zum Reflektor und zurück zum Sender/Detektor gelangen und die andererseits von dem Sender/Detektor direkt zum Reflektor gelangen, dann von dem Reflektor kommend an der rückwärtigen Strangwand bzw. den innen und außen liegenden Grenzflächen der rückwärtigen Strangwand reflektiert werden, zurück zum Reflektor gelangen und von diesem erneut reflektiert zurück zum Sender/Detektor gelangen. Aus diesem Laufzeitunterschied kann auf den Abstand der rückwärtigen Strangwand zum in seiner Position bekannten Reflektor bzw. die Wanddicke der dem Reflektor zugewandten rückwärtigen Strangwand bzw. auf den Durchmesser des Strangs geschlossen werden. Der Reflektor simuliert dann einen weiteren Sender. Mithilfe des Reflektors kann die dem Reflektor zugewandte Seite eines Strangs also auch dann verlässlich gemessen werden, wenn das ursprüngliche Empfangssignal von der rückwärtigen Strangwand durch mehrfach Reflexionen zwischen Sender/Detektor und den Sender/Detektor zugewandten Grenzflächen eines Strangs gestört ist.

Gemäß einer weiteren Ausgestaltung kann der mindestens eine Geometrieparameter eine Wanddicke eines Rohrs sein, wobei aus der detektierten Terahertzstrahlung die optische Wanddicke des Rohrs bestimmt wird, und wobei aus einem Vergleich der Außen- und Innendurchmesser des Rohrs mit der bestimmten optischen Wanddicke der Brechungsindex des Rohrs bestimmt wird. Wie bereits erläutert, dringt die Terahertzstrahlung zumindest teilweise in den strang- oder plattenförmigen Gegenstand ein. Sie wird zumindest an zwei Grenzflächen reflektiert. Hierbei kann es sich zum Beispiel um die dem Sender zugewandte Außenfläche und die dem Sender abgewandte Innenfläche eines dem Sender zugewandten Wandabschnitt eines Rohrs handeln. Es ist möglich, dass aus der dem Sender abgewandten Innenseite dieses Wandabschnitts noch ein erheblicher Strahlungsanteil austritt, der dann nach Durchlaufen des durch das Rohr begrenzten Hohlraums an der dem Sender zugewandten Innenseite eines gegenüberliegenden, dem Sender abgewandten Wandabschnitts des Rohrs reflektiert wird. Sämtliche der an diesen Grenzflächen reflektierten Strahlungsanteile können zurück reflektiert werden und von dem Detektor empfangen werden. Auf dieser Grundlage kann ohne Kenntnis des Brechungsindex des Materials die optische Wanddicke von Wandabschnitten des Rohrs bestimmt werden. Der vorgenannten Ausgestaltung liegt die Erkenntnis zugrunde, dass im einfachsten Fall, nämlich wenn vereinfachend angenommen wird, dass der durchstrahlte, dem Sender zugewandte Wandabschnitt und der gegenüberliegende, dem Sender abgewandte Wandabschnitt des Rohrs die gleiche Wanddicke besitzen, unter Berücksichtigung des Innendurchmessers und Außendurchmessers, insbesondere der Differenz zwischen Innendurchmesser und Außendurchmesser, des Rohrs der Brechungsindex berechnet werden kann. Sofern insoweit von dem Innendurchmesser oder dem Außendurchmesser des Rohrs gesprochen wird, meint dies den geometrischen Innendurchmesser und den geometrischen Außendurchmesser. Der Innen- und/oder Außendurchmesser des Rohrs kann messtechnisch bestimmt werden. Hierfür sind verschiedene Messverfahren denkbar, wie dies zum Beispiel in der DE 10 2018 128 248 A1 erläutert ist. Es kann aber auch mindestens einer dieser Durchmesser, zum Beispiel der Außendurchmesser, als bekannt angenommen werden. Darüber hinaus ist bei der oben erläuterten Reflexion der Messstrahlung an den genannten Grenzflächen des Rohrs auf Grundlage einer Auswertung der reflektierten Messstrahlung auch die Bestimmung des Innendurchmessers möglich, da der Brechungsindex der sich im Hohlraum des Rohrs befindlichen Luft bekannt ist.

Ein Ausführungsbeispiel der Erfindung wird nachfolgend anhand von Figuren näher erläutert. Es zeigen schematisch:

Figur 1    eine Vorrichtung zur Durchführung des erfindungsgemäßen Verfahrens in einer schematischen Seitenansicht,

Figur 2    eine geschnittene Teildarstellung der Vorrichtung aus Figur 1,

Figur 3    ein Diagramm zur Veranschaulichung der Temperaturabhängigkeit des Brechungsindex,

Figur 4    Diagramme zum Abkühlverhalten verschiedener Parameter für eine erste Messreihe ("Rohr 1"),

Figur 5    Diagramme zum Abkühlverhalten verschiedener Parameter für eine zweite Messreihe ("Rohr 2"),

Figur 6    eine Kennlinie des Schrumpfungsgrads für die Wanddicke als ein Geometrieparameter für die erste Messreihe ("Rohr 1"), und

Figur 7    eine Kennlinie des Schrumpfungsgrads für die Wanddicke als ein Geometrieparameter für die zweite Messreihe ("Rohr 2").

Soweit nichts anderes angegeben ist, bezeichnen in den Figuren gleiche Bezugszeichen gleiche Gegenstände.

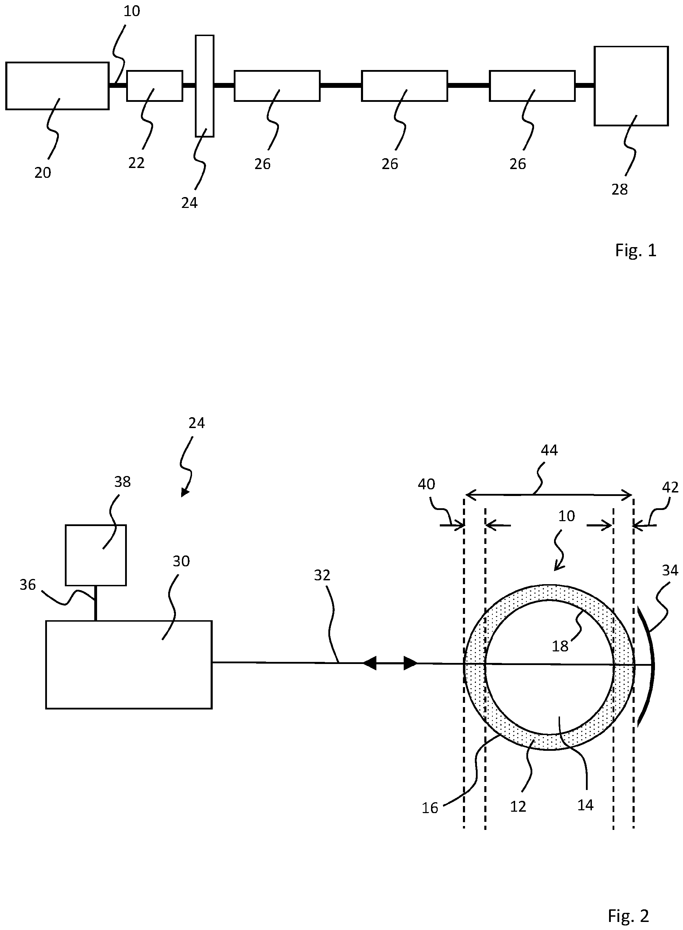

In den Figuren 1 und 2 ist ein Strang 10, vorliegend ein Kunststoffrohr 10 dargestellt, welches eine Wand 12, einen durch das Rohr 10 begrenzten Hohlraum 14, eine im Querschnitt kreisförmige äußere Oberfläche 16 und eine im Querschnitt ebenfalls kreisförmige innere Oberfläche 18 besitzt, die den Hohlraum 14 begrenzt. Das Kunststoffrohr 10 wird im vorliegenden Beispiel mit Hilfe eines Extruders in einer Extrusionsanlage 20 extrudiert und mittels einer geeigneten Fördereinrichtung entlang seiner Längsachse gefördert, in Figur 1 von links nach rechts. Nach Austritt aus dem Rohrkopf des Extruders der Extrusionsanlage 20 durchläuft das Rohr 10 zunächst eine erste Abkühlstrecke 22, in der das Rohr 10, welches stark erhitzt und noch nicht vollständig verfestigt, also noch fließfähige Anteile (Schmelze) aufweisend, aus der Extrusionsanlage 20 austritt, abgekühlt. Im weiteren Verlauf durchläuft das Rohr 10 eine Messeinrichtung 24, in der in nachfolgend näher erläuterter Weise der Brechungsindex des Rohrmaterials und Geometrieparameter des Rohrs 10, wie zum Beispiel Durchmesser und/oder Wanddicke bestimmt werden. Nachfolgend zu der Messrichtung 24 durchläuft das Rohr 10 weitere Abkühlstrecken 26, in denen eine weitere Abkühlung erfolgt. Nach vollständiger Verfestigung des Rohrs 10 wird dieses zum Beispiel in einer Ablängungseinrichtung 28 auf vorgegebene Abschnitte abgelängt.

Anhand Figur 2 sollen der Aufbau und die Funktion der Messeinrichtung 24 näher erläutert werden. Die Messeinrichtung 24 umfasst in dem dargestellten Beispiel einen Transceiver 30, in dem ein Sender und ein Detektor für Terahertzstrahlung kombiniert sind. Der Sender sendet Terahertzstrahlung 32 auf das Rohr 10 aus. Die Terahertzstrahlung wird an unterschiedlichen Grenzflächen des Rohrs 10 und an einem dem Transceiver 30 gegenüberliegend angeordneten Reflektor 34 reflektiert und gelangt zurück zu dem Transceiver 30, wo sie durch den Detektor detektiert wird. Der Transceiver 30 ist weiterhin über eine Leitung 36 mit einer Auswerteinrichtung 38 verbunden. Die von dem Detektor empfangene reflektierte Strahlung erzeugt entsprechende Messsignale, die über die Leitung 36 an die Auswerteeinrichtung 38 weitergegeben werden. Die Auswerteeinrichtung 38 kann auf diese Weise zum Beispiel die in Figur 2 eingezeichneten Wanddicken 40, 42 sowie den Durchmesser 44 bestimmen, zum Beispiel anhand von Laufzeitmessungen. Auch kann die Auswerteeinrichtung 38 auf Grundlage der von dem Detektor empfangenen Messsignale den Brechungsindex des Strangmaterials bestimmen, wie dies beispielsweise in der WO 2016/139155 A1 oder DE 10 2018 128 248 A1 beschrieben ist.

Mit der Messeinrichtung 24 werden zum Beispiel der Durchmesser 44 und die Wanddicken 40, 42 des Rohrs 10 sowie der Brechungsindex am in Figur 1 gezeigten Messort bestimmt, an dem das Rohr 10 noch nicht vollständig verfestigt ist, also noch fließfähige Anteile aufweist. Es ist auch möglich, dass der Transceiver 30, beispielsweise entlang einer Kreisbahn um das Rohr 10 rotiert und so die Geometrieparameter und gegebenenfalls auch den Brechungsindex an verschiedenen Orten über den Umfang des Rohrs 10 bestimmt. Der Reflektor 34 kann dann entweder ebenfalls um das Rohr 10 rotieren. Es ist aber auch möglich, dass auf den Reflektor 34 verzichtet wird.

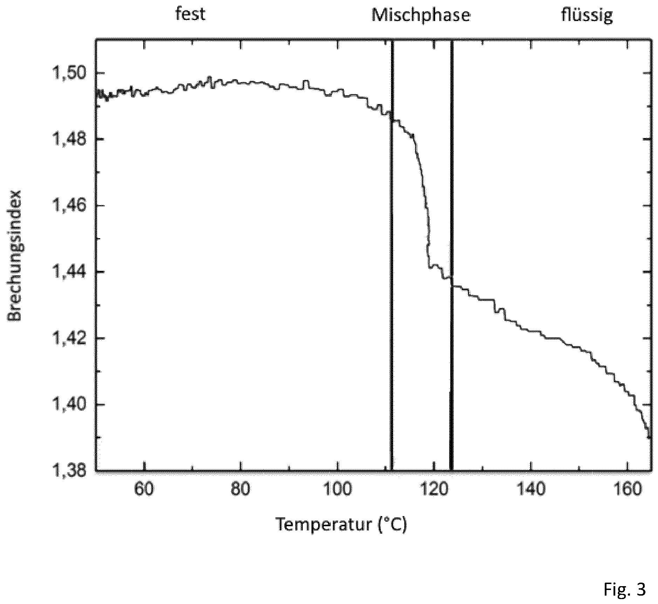

Figur 3 zeigt die Abhängigkeit des Brechungsindex von der Temperatur bzw. dem Aggregatzustand in dem dargestellten Beispiel für reines Polyethylen. Erkennbar ist einerseits, dass der Zusammenhang zwischen dem Brechungsindex und der Temperatur bzw. dem Aggregatzustand nicht-linear ist. Andererseits ist erkennbar, dass sich der Brechungsindex besonders stark in der Mischphase, also am Übergang zwischen dem festen und dem flüssigen Aggregatzustand ändert. Aus dem Verlauf des Brechungsindex bei veränderlichen Temperaturen ist weiter ersichtlich, dass der Brechungsindex zwischen Raumtemperatur und etwa 100° C weitgehend unverändert bleibt. Daraus kann abgeleitet werden, dass es beim Stillstand der Extrusionsanlage nach Abkühlung des Rohrs 10 zu einem mittleren Brechungsindex kommt, der dem Kaltwert entspricht. Es besteht daher die Möglichkeit, den Kaltwert des Brechungsindex, der wie oben erläutert ermittelt werden kann, auch aus der Intensität der Echos der äußeren Hülle des Rohrs, nun für diesen Rohrdurchmesser zu kalibrieren. Bei einer anschließenden Produktion kann so auch der Kaltwert des Brechungsindex in genannter Weise ermittelt werden und Veränderungen im Material können während der Produktion erkannt und auf den neu erfassten Brechungsindex bzgl. der zu erwartenden Schrumpfung abgeglichen werden-

Wie erläutert, zeigt Figur 3 die Abhängigkeit des Brechungsindex von der Temperatur für reines Polyethylen. Allgemein kommt für Rohre ein HDPE (High Density Polyethylen) mit Additiven zur Anwendung. Eine Schwarzfärbung der Rohre erfolgt vorzugsweise durch Zuführung von Carbon Black (Ruß). Mit weiteren Additiven wird die Viskosität der Schmelze bestimmt und damit ein optimales Fließverhalten bei hohem Druck und hoher Temperatur im Extruder mit zähem Fließverhalten nach Verlassen des Rohrkopfes bis zur endgültigen Abkühlung der Schmelze in der Rohrwandung, um ein Absacken der Schmelze (Sagging) möglichst gering zu halten. Während für reines PE die verschiedensten Eigenschaften des Materials bekannt sind, können diese nur bedingt auf ein typisches HDPE mit Additiven übertragen werden. Das betrifft die Schmelztemperatur, die Dichte, den Brechungsindex, die Absorption und all deren Temperaturabhängigkeiten für Millimeterwellen. Diese Probleme können mit dem erfindungsgemäßen Verfahren adressiert werden.

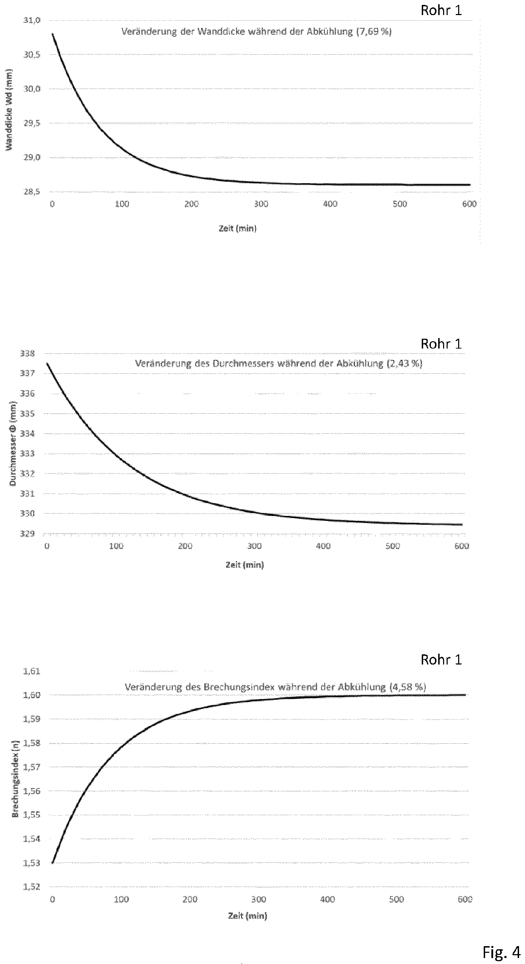

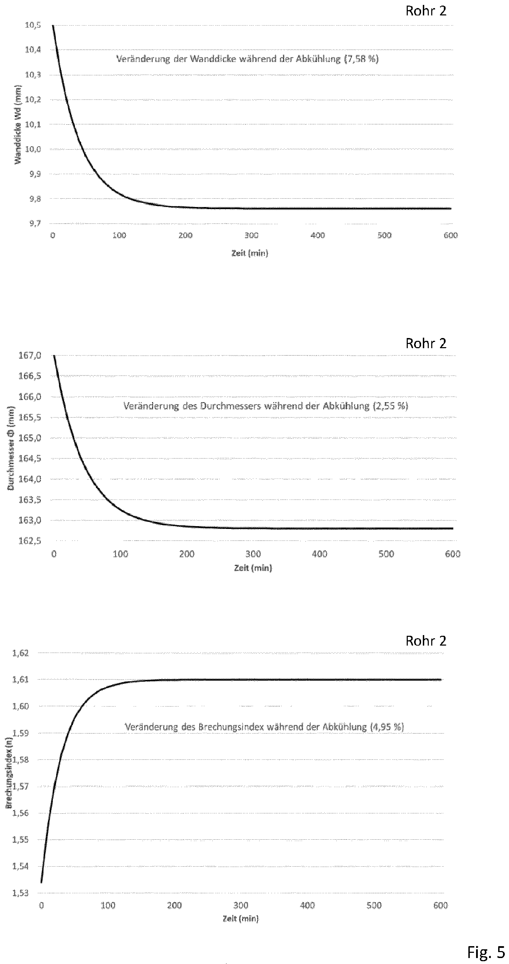

In Figur 4 sind jeweils über der Zeit aufgetragen die Wanddicke, der Durchmesser und der Brechungsindex für ein erstes beispielsweise in der in Figur 1 gezeigten Extrusionsanlage 20 extrudiertes Rohr mittlerer Größe ("Rohr 1"). In Figur 5 sind ebenfalls jeweils über der Zeit die Wanddicke, der Durchmesser und der Brechungsindex für ein zweites beispielsweise in der in Figur 1 gezeigten Extrusionsanlage 20 extrudiertes Rohr kleinerer Größe ("Rohr 2") aufgetragen. Das erste und zweite Rohr können sich zum Beispiel hinsichtlich ihrer Materialzusammensetzung und/oder ihrer Dimension unterscheiden. Zum Zeitpunkt Null ist für die durchgeführte Messung die Extrusionsanlage 20 angehalten worden und die Rohre sind entsprechend nicht mehr weiter entlang ihrer Längsachse gefördert worden. Die Messwerte sind dann über einen längeren Zeitraum aufgenommen worden, bis zur vollständigen Verfestigung der Rohre, wenn also keine zähflüssigen Anteile mehr enthalten sind. Zu erkennen ist für die beiden Messwertreihen jeweils ein im Wesentlichen inverses Verhalten des Brechungsindex zu der Wanddicke bzw. dem Durchmesser. Während mit zunehmender Verfestigung der Brechungsindex ansteigt, nehmen die Messwerte für Wanddicke und Durchmesser entsprechend ab. Weiterhin ist zu erkennen, dass sich für die beiden unterschiedlichen vermessenen Rohre mit den Messwertreihen erheblich unterschiedliche Verläufe zeigen.

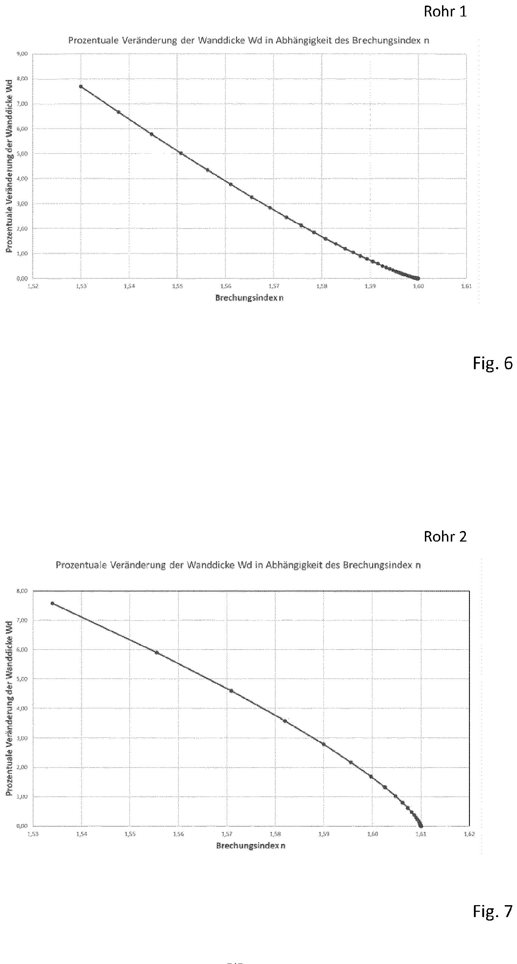

Figuren 6 und 7 zeigen mit dem erfindungsgemäßen Verfahren bestimmte Kennlinien, wobei die in Figur 6 gezeigte Kennlinie anhand der in Figur 4 dargestellten Daten ermittelt wurde und die in Figur 7 gezeigte Kennlinie anhand der in Figur 5 gezeigten Daten ermittelt wurde. Es ist jeweils der Zusammenhang zwischen der Schrumpfung und dem Brechungsindex für die Wanddicke des jeweiligen Rohrs gezeigt. Zum Erstellen der in den Figuren 6 und 7 gezeigten Kennlinien wurde die Wanddicke auf den Wert nach der vollständigen Verfestigung normiert. Die in den Figuren 6 und 7 jeweils auf der y-Achse aufgetragenen Schrumpfungsgrade in Prozent als Funktion des auf der x-Achse aufgetragenen Brechungsindex ergeben sich für die Wanddicke nach:

$$S_{wt}(n) = \left( \frac{wt(n)}{wt_{end}} - 1 \right) \cdot 100\%$$

, mit den oben erläuterten Variablen.

Diese in dem erfindungsgemäßen Ermittlungsschritt erstellten Kennlinien können nun verwendet werden, um anhand der in dem Bestimmungsschritt ermittelten Werte für Brechungsindex und Wanddicke der noch nicht vollständig verfestigten Rohre die Wanddicke im vollständig verfestigten Zustand zu berechnen und damit vorherzusagen. In entsprechender Weise kann dies für den Durchmesser erfolgen. Der Brechungsindex im vollständig verfestigten Zustand kann dabei gemessen oder für die jeweilige Materialzusammensetzung als bekannt vorausgesetzt werden. Insbesondere kann anhand der in den Bestimmungsschritt bestimmten Werte festgestellt werden, an welcher Position der jeweiligen in den Figuren 6 und 7 dargestellten Kennlinie man sich befindet, sodass entsprechend die weitere zu erwartende Schrumpfung bis zur vollständigen Verfestigung des jeweiligen Rohrs in der Kennlinie abgelesen werden kann.

Bezugszeichenliste

| 10 | Strang, Rohr |
| 12 | Wand |
| 14 | Hohlraum |
| 16 | äußere Oberfläche |
| 18 | innere Oberfläche |
| 20 | Extrusionsanlage |
| 22, 26 | Abkühlstrecke |
| 24 | Messeinrichtung |
| 28 | Ablängungsvorrichtung |
| 30 | Transceiver |
| 32 | Terahertzstrahlung |
| 34 | Reflektor |
| 36 | Leitung |
| 38 | Auswerteeinrichtung |
| 40,42 | Wanddicken |
| 44 | Durchmesser |

**Patentansprüche**

1. Verfahren zum Bestimmen mindestens eines Geometrieparameters eines noch nicht vollständig verfestigten, noch fließfähige Anteile aufweisenden strangoder plattenförmigen Gegenstands (10), **gekennzeichnet durch** die Schritte:

   - in einem Ermittlungsschritt wird für den strang- oder plattenförmigen Gegenstand (10) ein Zusammenhang zwischen dem Brechungsindex des strang- oder plattenförmigen Gegenstands (10) und einer im Zuge seiner vollständigen Verfestigung erfolgenden Schrumpfung ermittelt,
   - in einem Bestimmungsschritt werden der Brechungsindex und mindestens ein Geometrieparameter des noch nicht vollständig verfestigten, noch fließfähige Anteile aufweisenden strang- oder plattenförmigen Gegenstands (10) bestimmt,
   - aus den im Bestimmungsschritt bestimmten Werten für den Brechungsindex und den mindestens einen Geometrieparameter wird unter Berücksichtigung des im Ermittlungsschritt ermittelten Zusammenhangs der mindestens eine Geometrieparameter im vollständig verfestigten Zustand des strang- oder plattenförmigen Gegenstands (10) berechnet.

2. Verfahren nach Anspruch 1, **dadurch gekennzeichnet, dass** der mindestens eine Geometrieparameter der Durchmesser (44) und/oder die Wanddicke (40 42) eines Rohrs (10) ist, wobei in dem Bestimmungsschritt ein Zusammenhang zwischen dem Brechungsindex des Rohrs (10) und einer im Zuge seiner vollständigen Verfestigung erfolgenden Schrumpfung für den Durchmesser (44) und/oder die Wanddicke (40, 42) des Rohrs (10) ermittelt wird.

3. Verfahren nach einem der vorhergehenden Ansprüche, **dadurch gekennzeichnet, dass** der strang- oder plattenförmige Gegenstand (10) aus einer Extrusionsanlage (20) kommt und während der Bestimmung des mindestens einen Geometrieparameters entlang seiner Längsrichtung gefördert wird.

4. Verfahren nach einem der vorhergehenden Ansprüche, **dadurch gekennzeichnet, dass** der Zusammenhang im Ermittlungsschritt ermittelt wird, indem zu mehreren Zeitpunkten und/oder an mehreren Orten des strang- oder plattenförmigen Gegenstands (10) der Brechungsindex und der mindestens eine Geometrieparameter bestimmt werden.

5. Verfahren nach einem der vorhergehenden Ansprüche, **dadurch gekennzeichnet, dass** der Zusammenhang im Ermittlungsschritt ermittelt wird, indem der strang- oder plattenförmige Gegenstand (10) sich zumindest entlang eines Längsabschnitts vollständig verfestigen gelassen wird, wobei während des vollständigen Verfestigens mehrfach der Brechungsindex und der mindestens eine Geometrieparameter bestimmt werden.

6. Verfahren nach einem der vorhergehenden Ansprüche, **dadurch gekennzeichnet, dass** der Zusammenhang im Ermittlungsschritt in Form mindestens einer Kennlinie ermittelt wird, vorzugsweise einer Kennlinie, in der der Schrumpfungsgrad des strang- oder plattenförmigen Gegenstands (10) über dem Brechungsindex aufgetragen ist.

7. Verfahren nach einem der vorhergehenden Ansprüche, **dadurch gekennzeichnet, dass** zur Bestimmung des Brechungsindex und/oder des mindestens einen Geometrieparameters Terahertzstrahlung (32) auf den strang- oder plattenförmigen Gegenstand (10) ausgesandt wird, von dem strang- oder plattenförmigen Gegenstand (10) reflektierte Terahertzstrahlung (32) detektiert wird, und aus der detektierten Terahertzstrahlung (32) der Brechungsindex und/oder der mindestens eine Geometrieparameter bestimmt wird.

8. Verfahren nach Anspruch 7, **dadurch gekennzeichnet, dass** die Terahertzstrahlung (32) modulierte Dauerstrich-Terahertzstrahlung ist, insbesondere frequenzmodulierte Dauerstrich-Terahertzstrahlung und/oder dass die Terahertzstrahlung (32) impulsmodulierte Terahertzstrahlung oder phasenmodulierte Terahertzstrahlung ist.

9. Verfahren nach einem der Ansprüche 7 oder 8, **dadurch gekennzeichnet, dass** der mindestens eine Geometrieparameter aus einer Laufzeitmessung der ausgesandten und von dem strang- oder plattenförmigen Gegenstand (10) reflektierten Terahertzstrahlung (32) bestimmt wird.

10. Verfahren nach einem der Ansprüche 7 bis 9, **dadurch gekennzeichnet, dass** mindestens ein Sender zum Aussenden der Terahertzstrahlung (32) und mindestens ein Detektor zum Detektieren der ausgesandten und von dem strang- oder plattenförmigen Gegenstand (10) reflektierten Terahertzstrahlung (32) während des Aussendens und Detektierens der Terahertzstrahlung (32) um die Längsachse des strangförmigen Gegenstands (10) gedreht wird, vorzugsweise entlang einer Kreisbahn, oder parallel zur Oberfläche des plattenförmigen Gegenstands verschoben wird.

11. Verfahren nach einem der Ansprüche 7 bis 10, **dadurch gekennzeichnet, dass** die ausgesandte Terahertzstrahlung (32) vor der Detektion den strang- oder plattenförmigen Gegenstand (10) durchstrahlt, und dass anhand einer durch das Material des strang- oder plattenförmigen Gegenstands (10) verursachten Laufzeitänderung der ausgesandten und nach Durchstrahlen des strang- oder plattenförmigen Gegenstands (10) empfangenen Terahertzstrahlung (32) der Brechungsindex des strang- oder plattenförmigen Gegenstands (10) bestimmt wird.

12. Verfahren nach Anspruch 11, **dadurch gekennzeichnet, dass** die ausgesandte Terahertzstrahlung (32) nach Durchstrahlen des strang- oder plattenförmigen Gegenstands (10) von einem Reflektor (34) reflektiert wird und vor der Detektion den strang- oder plattenförmigen Gegenstand (10) erneut durchstrahlt.

13. Verfahren nach einem der Ansprüche 7 bis 12, **dadurch gekennzeichnet, dass** der mindestens eine Geometrieparameter eine Wanddicke (40, 42) eines Rohrs (10) ist, dass aus der detektierten Terahertzstrahlung (32) die optische Wanddicke des Rohrs (10) bestimmt wird, und dass aus einem Vergleich der Außen- und Innendurchmesser des Rohrs (10) mit der bestimmten optischen Wanddicke der Brechungsindex des Rohrs (10) bestimmt wird.

**Claims**

1. A method for determining at least one geometric parameter of a strand- or plate-shaped object (10) which has not yet completely solidified and still has flowable components, **characterized by** the following steps:

   - a relationship between the refractive index of the strand- or plate-shaped object (10) and a shrinkage occurring in the course of its complete solidification is established for the strand- or plate-shaped object (10) in an establishing step,
   - the refractive index and at least one geometric parameter of the strand-or plate-shaped object (10) which has not yet completely solidified and still has flowable components are determined in a determining step,
   - the at least one geometric parameter is calculated in the completely solidified state of the strand- or plate-shaped object (10) from the values for the refractive index and the at least one geometric parameter determined in the determining step, taking account of the relationship established in the establishing step.

2. The method according to Claim 1, **characterized in that** the at least one geometric parameter is the diameter (44) and/or the wall thickness (40, 42) of a tube (10). wherein, in the determining step, a relationship between the refractive index of the tube (10) and a shrinkage occurring in the course of its complete solidification is established for the diameter (44) and/or the wall thickness (40, 42) of the tube (10).

3. The method according to any one of the preceding claims, **characterized in that** the strand- or plate-shaped object (10) comes from an extrusion system (20) and is conveyed along its longitudinal direction during the determination of the at least one geometric parameter.

4. The method according to any one of the preceding claims, **characterized in that** the relationship is established in the establishing step by determining the refractive index and the at least one geometric parameter at multiple points in time and/or at multiple locations of the strand- or plate-shaped object (10).

5. The method according to any one of the preceding claims, **characterized in that** the relationship is established in the establishing step by allowing the strand- or plate-shaped object (10) to solidify completely at least along a longitudinal portion, wherein the refractive index and the at least one geometric parameter are determined multiple times during the complete solidification.

**6.** The method according to any one of the preceding claims, **characterized in that** the relationship is established in the establishing step in the form of at least one characteristic curve, preferably a characteristic curve in which the degree of shrinkage of the strand- or plate-shaped object (10) is plotted over the refractive index.

**7.** The method according to any one of the preceding claims, **characterized in that**, in order to determine the refractive index and/or the at least one geometric parameter, terahertz radiation (32) is emitted toward the strand- or plate-shaped object (10), terahertz radiation (32) reflected by the strand- or plate-shaped object (10) is detected, and the refractive index and/or the at least one geometric parameter is/are determined from the detected terahertz radiation (32).

**8.** The method according to Claim 7, **characterized in that** the terahertz radiation (32) is modulated continuous wave terahertz radiation, in particular frequencymodulated continuous wave terahertz radiation and/or **in that** the terahertz radiation (32) is pulse-modulated terahertz radiation or phase-modulated terahertz radiation.

**9.** The method according to any one of Claims 7 or 8, **characterized in that** the at least one geometric parameter is determined from a propagation time measurement of the terahertz radiation (32) emitted and then reflected by the strand- or plate-shaped object (10).

**10.** The method according to any one of Claims 7 to 9, **characterized in that** at least one transmitter for emitting the terahertz radiation (32) and at least one detector for detecting the terahertz radiation (32) emitted and then reflected by the strand-or plate-shaped object (10) are rotated about the longitudinal axis of the strandshaped object (10), preferably along a circular path, or are displaced parallel to the surface of the plate-shaped object during the emission and detection of the terahertz radiation (32).

**11.** The method according to any one of Claims 7 to 10, **characterized in that** the emitted terahertz radiation (32) penetrates the strand- or plate-shaped object (10) prior to the detection, and **in that** the refractive index of the strand- or plate-shaped object (10) is determined using a propagation time change of the terahertz radiation (32) emitted and then received after penetrating the strand- or plate-shaped object (10) caused by the material of the strand- or plate-shaped object (10).

**12.** The method according to Claim 11, **characterized in that** the emitted terahertz radiation (32) is reflected by a reflector (34) after penetrating the strand- or plate-shaped object (10) and, prior to the detection, penetrates the strand- or plate-shaped object (10) again.

**13.** The method according to any one of Claims 7 to 12, **characterized in that** the at least one geometric parameter is a wall thickness (40, 42) of a tube (10), **in that** the optical wall thickness of the tube (10) is determined from the detected terahertz radiation (32), and **in that** the refractive index of the tube (10) is determined from a comparison of the outside and inside diameters of the tube (10) with the determined optical wall thickness.

**Revendications**

**1.** Procédé de détermination d'au moins un paramètre géométrique d'un objet en forme de fil ou de plaque (10) pas encore complètement solidifié présentant encore des parties fluides, **caractérisé par** les étapes suivantes :

- dans une étape d'identification, une corrélation entre l'indice de réfraction de l'objet en forme de fil ou de plaque (10) et un rétrécissement produit pendant sa solidification complète est identifiée pour l'objet en forme de fil ou de plaque (10),
- dans une étape de détermination, l'indice de réfraction et au moins un paramètre géométrique de l'objet en forme de fil ou de plaque (10) pas encore complètement solidifié présentant encore des parties fluides sont déterminés,
- à partir des valeurs déterminées dans l'étape de détermination pour l'indice de réfraction et l'au moins un paramètre géométrique, l'au moins un paramètre géométrique est calculé à l'état complètement solidifié de l'objet en forme de fil ou de plaque (10) en tenant compte de la corrélation identifiée dans l'étape d'identification.

**2.** Procédé selon la revendication 1, **caractérisé en ce que** l'au moins un paramètre géométrique est le diamètre (44) et/ou l'épaisseur de paroi (40, 42) d'un conduit (10), dans lequel, dans l'étape de détermination, une corrélation entre l'indice de réfraction du conduit (10) et un rétrécissement produit pendant sa solidification complète est identifiée pour le diamètre (44) et/ou l'épaisseur de paroi (40, 42) du conduit (10).

**3.** Procédé selon l'une des revendications précédentes, **caractérisé en ce que** l'objet en forme de fil ou de plaque (10) provient d'une installation d'extrusion (20) et est transporté le long de son sens longitudinal pendant la détermination de l'au moins un paramètre géométrique.

4. Procédé selon l'une des revendications précédentes, **caractérisé en ce que** la corrélation est identifiée dans l'étape d'identification, par détermination de l'indice de réfraction et de l'au moins un paramètre géométrique à différents moments et/ou à différents endroits de l'objet en forme de fil ou de plaque (10).

5. Procédé selon l'une des revendications précédentes, **caractérisé en ce que** la corrélation est identifiée dans l'étape d'identification, par solidification complète de l'objet en forme de fil ou de plaque (10) au moins le long d'une section longitudinale, dans lequel l'indice de réfraction et l'au moins un paramètre géométrique sont déterminés plusieurs fois pendant la solidification complète.

6. Procédé selon l'une des revendications précédentes, **caractérisé en ce que** la corrélation est identifiée sous la forme d'au moins une courbe caractéristique dans l'étape d'identification, de préférence une courbe caractéristique dans laquelle le degré de rétrécissement de l'objet en forme de fil ou de plaque (10) est appliqué au-dessus de l'indice de réfraction.

7. Procédé selon l'une des revendications précédentes, **caractérisé en ce que** pour la détermination de l'indice de réfraction et/ou de l'au moins un paramètre géométrique, un rayonnement térahertz (32) est émis vers l'objet en forme de fil ou de plaque (10), le rayonnement térahertz (32) réfléchi par l'objet en forme de fil ou de plaque (10) est détecté, et l'indice de réfraction et/ou l'au moins un paramètre géométrique est/sont déterminé(s) à partir du rayonnement térahertz (32) détecté.

8. Procédé selon la revendication 7, **caractérisé en ce que** le rayonnement térahertz (32) est un rayonnement térahertz à onde continue modulé, en particulier un rayonnement térahertz à onde continue modulé en fréquence, et/ou **en ce que** le rayonnement térahertz (32) est un rayonnement térahertz modulé par impulsion ou un rayonnement térahertz modulé en phase.

9. Procédé selon l'une des revendications 7 ou 8, **caractérisé en ce que** l'au moins un paramètre géométrique est déterminé à partir d'une mesure du temps de propagation du rayonnement térahertz (32) émis et réfléchi par l'objet en forme de fil ou de plaque (10).

10. Procédé selon l'une des revendications 7 à 9, **caractérisé en ce qu'**au moins un émetteur pour l'émission du rayonnement térahertz (32) et au moins un détecteur pour la détection du rayonnement térahertz (32) émis et réfléchi par l'objet en forme de fil ou de plaque (10) sont mis en rotation autour de l'axe longitudinal de l'objet en forme de fil (10), de préférence déplacés le long d'un trajet orbital ou parallèlement à la surface de l'objet en forme de plaque, pendant l'émission et la détection du rayonnement térahertz (32).

11. Procédé selon l'une des revendications 7 à 10, **caractérisé en ce que** le rayonnement térahertz (32) émis traverse l'objet en forme de fil ou de plaque (10) avant la détection, et **en ce que** l'indice de réfraction de l'objet en forme de fil ou de plaque (10) est déterminé à l'aide d'une modification du temps de propagation du rayonnement térahertz (32) émis et reçu après avoir traversé l'objet en forme de fil ou de plaque (10), générée par le matériau de l'objet en forme de fil ou de plaque (10).

12. Procédé selon la revendication 11, **caractérisé en ce que** le rayonnement térahertz (32) émis est réfléchi par un réflecteur (34) après avoir traversé l'objet en forme de fil ou de plaque (10) et traverse à nouveau l'objet en forme de fil ou de plaque (10) avant la détection.

13. Procédé selon l'une des revendications 7 à 12, **caractérisé en ce que** l'au moins un paramètre géométrique est une épaisseur de paroi (40, 42) d'un conduit (10), **en ce que** l'épaisseur de paroi optique du conduit (10) est déterminée à partir du rayonnement térahertz (32) détecté, et **en ce que** l'indice de réfraction du conduit (10) est déterminé à partir d'une comparaison entre le diamètre extérieur et intérieur du conduit (10) et l'épaisseur de paroi optique déterminée.

Fig. 1

Fig. 2

Fig. 3

Fig. 4

Rohr 2

Rohr 2

Rohr 2

Fig. 5

Rohr 1

Prozentuale Veränderung der Wanddicke Wd in Abhängigkeit des Brechungsindex n

Fig. 6

Rohr 2

Prozentuale Veränderung der Wanddicke Wd in Abhängigkeit des Brechungsindex n

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016139155 A1
- DE 102018128248 A1
- WO 2020070047 A1
- EP 0400310 A2
- CA 2891456 A1